(19) Europäisches Patentamt
European Patent Office
Office européen des brevets

(11) Publication number: 0 359 832 A1

(12) **EUROPEAN PATENT APPLICATION published in accordance with Art. 158(3) EPC**

(21) Application number: 89904228.7

(51) Int. Cl.[5]: C09C 3/08

(22) Date of filing: 31.03.89

(86) International application number: PCT/JP89/00346

(87) International publication number: WO 89/09245 (05.10.89 89/24)

(30) Priority: 01.04.88 JP 81046/88
30.11.88 JP 300622/88

(43) Date of publication of application: 28.03.90 Bulletin 90/13

(84) Designated Contracting States: DE FR GB NL

(71) Applicant: NIPPON SODA CO., LTD.
2-1, Ohtemachi 2-chome
Chiyoda-ku Tokyo, 100(JP)

(72) Inventor: MORI, Atsushi R&D Lab. for Specialty Chemicals
Nippon Soda Co., Ltd. 12-54, Goiminamikaigan
Ichihara-shi Chiba 290(JP)
Inventor: AIZAWA, Mamoru R&D Lab. for Specialty Chemicals
Nippon Soda Co., Ltd. 12-54, Goiminamikaigan
Ichihara-shi Chiba 290(JP)
Inventor: KATAOKA, Yoshitoshi R&D Lab. for Specialty Chem.
Nippon Soda Co., Ltd. 12-54, Goiminamikaigan
Ichihara-shi Chiba 290(JP)

(74) Representative: de Bruijn, Leendert C. et al
Nederlandsch Octrooibureau
Scheveningseweg 82 P.O. Box 29720
NL-2502 LS 's-Gravenhage(NL)

(54) **SURFACE-TREATING AGENT AND FILLER POWDER SURFACE-TREATED WITH THE AGENT.**

(57) A surface-treating agent comprising (A) tetraalkoxytitanium and/or a product of hydrolysis and polycondensation thereof (average degree of condensation: up to 6); (B) at least one member selected from among maleic acid monoesters, glutaric acid monoesters, itaconic acid monoesters, citraconic acid monoesters, glutaconic acid monoesters, diglycolic acid monoesters, N-alkylamino alcohols, and polyalkylene glycolmonoalkyl ethers; and (C) a chelating agent capable of forming a chelate ring with a titanium atom. This agent is usable in an aqueous system.

EP 0 359 832 A1

# Surface treating agent and filler powder whose surface is treated by it

## (Technological fields)

This invention relates to a surface treating agent used to modify the surface of filler powder to be blended into a polymer matrix and in more detail, to a surface treating agent with alkoxy titanium derivative as a base and available in an aqueous system.

## (Background Technology)

Fillers used for composite systems of polymer matrix and filler powder such as synthetic resin moldings, coatings and inks are usually surface treated with purpose of improvement of the physical properties, processability, etc of the composite system.

Known surface treating agents for these filler powders include silane coupling agents consisting of organic silane derivative and titanium coupling agents consisting of alkyl titanium derivative.

Water or a water-alcohol solution is usually used for the silane coupling agents as a solvent. For the titanium coupling agents, organic solvents are used.

It is laid open (see U.S. Patent Specification No. 3074818) that reaction products of tetra-alkoxy titanium, such as isopropoxy titanium amino-ethanolate and isopropoxy titanium tris(amino-ethanolate), as an alkoxy titanium derivative stable in an aqueous system and amino-alcohol are used as a catalyst for esterification. It is proposed that a water-insoluble titanium coupling agent is stabilized by using together with an amino compound such as ammonia water, triethylamine, dimethylamino-ethanol, triethanolamine or morpholine in order to use in an aqueous system (see Japanese unexamined patent publication: Tokkaisho No. 56-112973).

A surface treatment of filler powder with silane coupling agent provides excellent effects for siliceous filler powders such as glass beads, but hardly has an effect for filler powders other than siliceous ones. Meanwhile, titanium coupling agents have excellent surface treatment effects for those other than siliceous filler powders such as calcium carbonate and titanium oxide. However, they are generally very easily hydrolyzed so as to be difficult to use in aqueous systems, thereby being usually used in organic-solvent systems.

However organic solvents have dangers of fire, explosion, etc and may also cause poisoning if inhaled. Titanium coupling agents available in aqueous systems are therefore desired.

The aforementioned alkoxy titanium derivatives and titanium coupling agents, which can be used in aqueous systems, provide insufficient surface treatment effects for filler powders. Generally no filler powders are treated in aqueous systems.

An object of this invention is to provide titanium surface treating agents available in aqueous systems and surface-treated filler powders with excellent dispersibility into polymer matrixes.

The surface treating agent of this invention contains a reaction product of

(A) a tetra-alkoxy titanium and/or a hydrolyte condensation polymer of tetra-alkoxy titanium with average condensation degree of 6 or below,

(B) at least one compound selected from the group consisting of maleic acid monoesters, succinic acid monoesters, glutaric acid monoesters, itaconic acid monoesters, citraconic acid monoesters, glutaconic acid monoesters, diglycolic acid monoesters, N-alkylamino-alcohols and polyalkylene glycol monoalkyl ethers, and

(C) a chelating agent able to form a chelate ring with Ti atom,

and (B) is 0.1 to 2.0 moles per mole of Ti atom and the chelating agent of (C)

is 0.5 moles or more per mole of Ti atom.

This invention is described in detail below.

(1) Preparation of surface treating agent

i) Material compounds

① Tetra-alkoxy titanium

The tetra-alkoxy titanium used in this invention is an organic titanium compound represented by the following general formula (1)

$Ti(OR)_4$ .......... (1)

where ORs are one or 2 or more of alkoxy groups, preferably alkoxy groups having 1 to 6 carbon atoms, such as methoxy, ethoxy, n-propoxy, i-propoxy, n-butoxy, tert-butoxy, pentyloxy and n-hexyloxy. Tetra-isopropoxy titanium and tetra n-butoxy titanium are more preferably used from the view point of treatment effect as surface treating agent. The hydrolyte condensation polymer of tetra-alkoxy titanium is a polymer with average condensation degree of 6 or below which is obtained in a way that one or two or more of the said tetra-alkoxy titanium is hydrolyzed using equal mole or less of water in the presence of acidic or alkaline catalyst for condensation polymerization. If the average condensation degree is too large, the obtained alkoxy titanium derivative has excessively high molecular weight with reduced adhesion on filler powder, resulting in decrease in the surface treatment effects of the filler powder. The hydrolyte condensation polymer may have any structure of chain, circular, netty, etc.

② Dicarboxylic acid monoester

The dicarboxylic acid monoesters used in this invention are described below.

| | |
|---|---|
| Maleic acid monoester | R'OCOCH=CHCOOH |
| Succinic acid monoester | $R''OCO(CH_2)_2COOH$ |
| Glutaric acid monoester | $R''OCO(CH_2)_3COOH$ |
| Itaconic acid monoester | $R''OCOCH_2C(=CH_2)COOH$ |

or $HOCOCH_2CCOOR''$
$\|$
$CH_2$

Citraconic acid monoester $R''OCOCH{=}C{-}COOH$
$|$
$CH_3$

or $HOCOCH{=}C{-}COOR''$
$|$
$CH_3$

Glutaconic acid monoester $R''OCOCH{=}CHCH_2COOH$

or $HOCOCH{=}CHCH_2COOR''$

Diglycolic acid monoester $R''OCOCH_2OCH_2COOH$

In the above general formulae, R' is an alkyl or alkenyl group, straight chain or branched, having 1 to 12 carbon atoms, and, for example, the following are included:

$CH_3$, $C_2H_5$, $(CH_3)_2CH$, $CH_2{=}CHCH_2$, $C_8H_{17}$, $C_{12}H_{25}$

R" is a lower alkyl group, preferably a methyl, ethyl, propyl or isopropyl group.

②' N-alkylamino-alcohol

The N-alkylamino-alcohols are amino compounds represented by the following formula:

$R^2$
$|$
$R^1-N-R^3-OH$

where $R^1$ and $R^2$ are a hydrogen atom or an alkyl group, straight chain or branched, having 1 to 12 carbon atoms (both of $R^1$ and $R^2$ are not a hydrogen atom simultaneously) and $R^3$ is an alkylene group having 2 to 4 carbon atoms.

The following are example compounds:

$CH_3NH(CH_2)_2OH$, $(CH_3)_2N(CH_2)_3OH$, $C_2H_5NH(CH_2)_4OH$, $C_3H_7NH(CH_2)_2OH$

$C_8H_{17}NH(CH_2)_2OH$, $C_{12}H_{25}NH(CH_2)_4OH$

②" Polyalkylene glycol monoalkyl ether

The polyalkylene glycol monoalkyl ethers are at least one ether compound represented by the following formula:

$R^5OR^6(O-R^6)nOH$

where $R^5$ is an alkyl group, straight chain or branched, having 1 to 12 carbon atoms, $R^6$ is an alkylene group having 2 to 4 carbon atoms and n is an integer between 1 and 12.

The ether compounds represented by the above general formula include the following:

$CH_3(OCH_2CH_2)_2OH$, $CH_3(OCH_2CH_2)_3OH$, $CH_3(OCH_2CH_2)_{10}OH$, $C_3H_7(OCH_2CH_2)_3OH$

$C_4H_9(OCH_2CH_2)_2OH$, $C_{12}H_{25}(OCH_2CH_2)_2OH$, $C_4H_9(O(CH_2)_3)_2OH$

$C_{10}H_{21}(O(CH_2)_3)_3OH$, $CH_3(O(CH_2)_4)_2OH$, $C_3H_7(O(CH_2)_4)_3OH$

$C_8H_{17}(O(CH_2)_4)_2OH$

③ Chelating agent

The chelating agents able to form a chelate ring with Ti atom include hydroxy carboxylic acids having at least one hydroxyl group and at least one carboxyl group in a molecule such as glycolic acid, lactic acid, α-oxy-n-butyric acid, α-oxy isovaleric acid, 2-ethyl-2-oxybutanoic acid, hydroacrylic acid, β-oxybutyric acid, α-oxyacrylic acid, tartronic acid, oxymethyl malonic acid, malic acid, oxyglutaric acid, citric acid, glyceric acid and tartaric acid; β-diketones such as acetylacetone and 3-phenyl-acetylacetone; α- or β-keto acids and their lower alkyl esters such as acetoacetic acid and propionyl butyric acid and their methyl, ethyl, isopropyl and n-butyl esters; and (poly) alkylene glycols.

ii) Preparation method

A surface treating agent of this invention is easily prepared in a way that (A) a tetra-alkoxy titanium and/or its hydrolyte condensation polymer (with condensation degree of 6 or below), (B) at least one compound selected from the

said group consisting of dicarboxylic acid monoesters, N-alkylamino alcohols and polyalkylene glycol monoalkyl ethers, and (C) a chelating agent are mixed so that the said (B) is 0.1 to 2.0 moles per mole of Ti atom and (C) is 0.5 moles or more per mole of Ti atom, the obtained mixture is stirred for 0.1 to 1 hour at a temperature of 40 to 80℃ in the presence or absence of solvents, and, if necessary, byproduced alcohol and solvents are removed under reduced pressure.

iii) Reaction product

The reaction product obtained according to the above preparation method is an alkoxy titanium derivative or contains it as a base. The alkoxy titanium derivative has a hydrolyzable alkoxy group, a non-hydrolyzable group (a residual group of the said (B) compound) and a residual group of the chelate compound.

Content of the said non-hydrolyzable group is preferable in a range of 0.1 to 2.0 moles per mole of Ti atom. If the number of non-hydrolyzable groups is too small, the stability in an aqueous system is lowered and the surface treatment effect of filler powder is reduced as well. If too large, the surface treatment effect of filler powder is also decreased.

The number of residual groups of chelate compound able to form a chelate ring with Ti atom is preferably 0.5 moles or more per mole of Ti atom. If the number of residual groups of chelate compound able to form a chelate ring with Ti atom is too small, the effect of improving the stability to an aqueous system is not exhibited fully.

iv) Solvent

The surface treating agent of this invention contains the said alkoxy titanium derivative as an effective component. To make a solution of surface treating agent, any solvents dissolving the said alkoxy titanium derivative can be employed. Particularly water, organic solvents such as lower alcohols or aqueous solutions of organic solvents, preferably water, are used.

(2) Surface Treatment of Filler Powder

i) Filler powder

There are no particular limitations on filler powders to be surface treated if compounded with polymer matrix and can improve various characteristics of the composite system. For example, the powders include calcium carbonate, kaolin, clay, mica, talc, calcium silicate, titanium oxide, magnesium carbonate, alumina, calcium sulfate, barium sulfate, silica, zeolite, aluminum oxide, aluminum hydroxide, magnesium hydroxide, iron oxide, cobalt oxide, glass fiber, potassium titanate fiber, carbon fiber, iron powder, iron alloy powder, aluminum powder, copper powder and copper alloy powder.

ii) Surface treatment

The surface treatment of filler powder with the said surface treating agent is carried out in a way that filler powder is immersed in a surface treating agent so as to coat 100 parts by weight of filler powder with 0.05 to 5 parts by weight, preferably 0.5 to 2.0 parts by weight, of the said alkoxy titanium derivative to form coating of alkoxy titanium derivative on the surface of the filler powder. Particularly for substances prepared by pulverizing a natural product wet such as heavy calcium carbonate, kaolin, clay, mica and talc, an addition of the said surface treating agent to water used when pulverizing allows simultaneous attainment of pulverizing and surface treatment. In the case of such substances as soft calcium carbonate prepared from a reaction of lime milk and carbon dioxide, and magnesium hydroxide, aluminum hydroxide and iron oxide which are prepared by synthesis, the said surface treating agent is added to the slurry after the reation in an aqueous system for surface treatment, enabling to shorten the manufacturing processes.

The filler powder thus obtained has coating of alkoxy titanium derivative. This coating is preferable to form continuous film on the surface of the filler powder, but not essential in particular.

(3) Polymer Matrix

The filler powders whose surface is treated according to this invention can be mixed into various types of polymer matrix to form a complex of polymer matrix and filler powder. Polymer matrixes capable of compounding include, for example, polyurethane, epoxy resins, polyamide, polyester, polycarbonate, polysulfone, polysulfide, polyphenylene oxide, polyethylene, polypropylene, polyvinyl chloride and acrylic resins, and particularly polyurethane, acrylic resins, epoxy resins, polyamide and polyether polyol are preferable.

(4) Action

An alkoxy titanium derivative according to this invention is extremely stable in an aqueous system, and surface treatment of filler powder is performed by using its aqueous solution. It is inferred that the stability in an aqueous solution is accomplished due to the introduction of residual group of chelate compound able to form a chelate ring with Ti atom, as a substituent. The stability of the alkoxy titanium derivative of this invention in an aqueous system is attained also by introducing only a non-hydrolyzable group, which is a residual group of the said (B) compound, as a substituent because of formation of chelate ring with Ti atom. Introduction of another chelating agent residual group together further improves the stability in an aqueous system.

The filler powder whose surface is treated according to this invention is powder with coating of alkoxy titanium derivative obtained by treating the surface using the said surface treating agent. Therefore, the presence of non-hydrolyzable group with good affinity with polymer matrix on the surface of the filler powder provides extremely excellent dispersibility of the filler powder into the polymer matrix, resulting in a great improvement of flowability of polymer-filler composite system.

〔Best Form to Execute the Invention〕

This invention is further described in detail by reference to the following examples and comparative examples. The range of this invention is not limited at all by the following examples. "Parts" and "%" used in the following examples are by weight unless otherwise specified.

I-(1) Preparation of surface treating agent

(a) Sample T-1

In a reaction flask equipped with a stirrer, a thermometer, a water-cooled condenser and a heater was placed a mole (284 parts) of tetra-isopropoxy titanium, to which a mole (75 parts) of N-methylamino ethanol (MAE) was gradually added with stirring. Then 2 moles (200 parts) of acetylacetone (AcAc) was gradually added. The reaction gradually proceeded to generate heat. The mixture was kept stirred at 60℃ for an hour to mature the reaction, then byproduced isopropanol was distilled under reduced pressure to give 496 parts of light yellow solid sample (T-1).

The obtained T-1 had $TiO_2$ analytical value of 15.9% (theoretical value: 16.0%).

The results of analysis of T-1 by infrared absorption spectrum (IR analysis) showed that the absorption based on the -OH group of material MAE disappeared and the absorption based on the CO group of coordinated AcAc was recognized.

From the above results, it is inferred that T-1 is a crude product of alkoxy titanium derivative of which one isopropoxy group of tetra-isopropoxy titanium is transesterified with MAE residual group and furthermore a mole of AcAc is coordinated.

(b) Sample T-2

In the same reaction flask used for the synthesis of Sample T-1 was placed a mole (830 parts) of hydrolyte condensation polymer of tetra-isopropoxy titanium with average condensation degree of 4, to which a mole (117 parts) of

diethylamino-ethanol (DEAE) was gradually added with stirring. Then a mole (76 parts) of glycolic acid (GA) and 2 moles (200 parts) of AcAc were gradually added. The reaction gradually proceeded to generate heat. The mixture was kept stirred at 60℃ for an hour to mature the reaction, then byproduced isopropanol was distilled under reduced pressure to give light brown liquid sample T-2.

(c) Sample T-3

A reaction and post treatment were carried out under the same conditions as those used for the synthesis of Sample T-1 except that the materials used in the synthesis of Sample T-1 were replaced with a mole (340 parts) of tetra-butoxy titanium, a mole (130 parts) of monomethyl maleate (MAM) and a mole (176 parts) of 3-phenylacetylacetone (PhAc), respectively. Orange liquid Sample T-3 was obtained.

The obtained T-3 had $TiO_2$ analytical value of 13.5% (theoretical value: 13.6%).

The results of analysis of T-3 by infrared absorption spectrum (IR analysis) showed that the absorption based on the -COOH group of material MAM disappeared and the absorption based on the $-C_6H_5$ group of coordinated PhAc was recognized.

From the above results, it is inferred that T-3 is a crude product of alkoxy titanium derivative of which one butoxy group of tetra-butoxy titanium is transesterified with MAM residual group and furthermore a mole of PhAc is coordinated.

(d) Sample T-4

A reaction and post treatment were carried out under the same conditions as those used for the synthesis of Sample T-2 except that the materials used in the synthesis of Sample T-2 were replaced with a mole (1,390 parts) of hydrolyte condensation polymer of tetra-butoxy titanium with average condensation degree of 6, a mole (228 parts) of mono (2-ethylhexyl) maleate (MAEH), a mole (90

parts) of lactic acid (LA) and 2 moles (232 parts) of methyl acetoacetate (AAMe), respectively. Light yellow solid Sample T-4 was obtained.

(e) Sample T-5

A reaction and post treatment were carried out under the same conditions as those used for the synthesis of Sample T-1 except that a mole (206 parts) of triethylene glycol monobutyl ether (TEGB) was used instead of MAE used in the synthesis of Sample T-1. Brown solid Sample T-5 was obtained.

(f) Sample T-6

A reaction and post treatment were carried out under the same conditions as those used for the synthesis of Sample T-2 except that the materials used in the synthesis of Sample T-2 were replaced with a mole (1,012 parts) of hydrolyte condensation polymer of tetra-isopropxy titanium with average condensation degree of 5, a mole (330 parts) of dibutylene glycol mono (dodecyl) ether (DBGD) and a mole (150 parts) of tartric acid (TA), respectively. Orange solid Sample T-6 was obtained.

(g) Comparative Sample C-1

In the same reaction flask used for the synthesis of Sample T-1 was placed a mole (340 parts) of tetra-butoxy titanium, to which 2 moles (298 parts) of triethanolamine was gradually added with stirring. The reaction gradually proceeded to generate heat. After the addition of triethanolamine was completed, the mixture was kept stirred at 60℃ for another an hour to mature the reaction.

Then byproduced n-butanol was distilled under reduced pressure to give light yellow liquid (C-1).

The obtained C-1 had molecular weight of 490 and specific gravity of 1.051, and gradually changed to yellow while in storage.

(h) Comparative Sample C-2

In the same reaction flask used for the synthesis of Sample (T-1) was placed a mole (284 parts) of tetra-isopropoxy titanium, to which 3 moles (312 parts) of N-aminoethyl aminoethanol was gradually added with stirring. The reaction gradually proceeded to generate heat. After the addition of N-aminoethyl aminoethanol was completed, the mixture was kept stirred at 60℃ for another an hour to mature the reaction. Then byproduced isopropanol was distilled under reduced pressure to give light yellow liquid C-2.

The obtained C-2 had molecular weight of 416 and specific gravity of 1.142, and gradually changed to yellow while in storage.

I-(2) Preparation of surface-treated inorganic filler [I]

Two parts of each of Samples T-1 to T-6 and Comparative Samples C-1 and C-2, which were synthesized in the previous subsection (1), was dissolved in 98 parts of water to give an aqueous solution, respectively.

To 50 parts of each of the prepared aqueous solutions was added 100 parts of heavy calcium carbonate (trade name: Whiton SSB, Shiraishi Kogyo Co.) to well mix in a mortar. Then the mixture was spread in a stainless-steel tray and dried in a hot-air dryer of 110℃ for 2 hours. Surface treated fillers with coating of alkoxy titanium derivative, Samples F-1 to F-6 and Comparative Samples H-1 and H-2, were thus obtained.

Heavy calcium carbonate was surface treated using a 2% isopropanol solution of Sample T-1 under the same conditions as those used in the above, to give a surface treated filler with coating of alkoxy titanium derivative, Sample F-7. Using a 2% aqueous solution of Sample T-1 stored at room temperature for 30 days, heavy calcium carbonate was surface treated under the same conditions as those used in the above, to give a surface treated filler with coating of alkoxy titanium derivative, Sample F-8.

I-(3) Viscosity reducing effect of composite system of polyether polyol and

inorganic filler

100 parts of each of surface-treated inorganic fillers prepared in the above subsection (2), Samples F-1 to F-8 and Comparative Samples H-1 and H-2, was added to 75 parts of polyether polyol (trade name: Diol 3000, Mitsui Nisso Urethane Co.) and kneaded for 30 minutes using an Ishikawa-type crusher to give a kneaded product, respectively.

For comparison's sake, to 75 parts of the said polyether polyol were added a part of Sample T-1 prepared in the previous subsection (1) and 100 parts of non-treated heavy calcium carbonate, and kneaded under the same conditions as those used in the above, to give a kneaded product. As a blank, to 75 parts of the said polyether polyol was added 100 parts of the said heavy calcium carbonate with no surface treated, and kneaded under the same conditions as those used in the above, to give a kneaded product.

The obtained kneaded products were measured for the viscosity at 25°C using a rotary viscometer (B8R type, Tokyo Keiki Co) under the conditions of rotor No. 7 and 20 rpm.

The results of measured viscosity are shown in Table 1.

Table 1

| Sample No. | | Surface treating agent | | System* viscosity cp.25°C |
|---|---|---|---|---|
| | | Sample No. | Solvent | |
| Example | F-1 | T-1 | Water | 3,600 |
| | F-2 | T-2 | Water | 4,800 |
| | F-3 | T-3 | Water | 4,200 |
| | F-4 | T-4 | Water | 5,500 |
| | F-5 | T-5 | Water | 5,000 |
| | F-6 | T-6 | Water | 4,500 |
| | F-7 | T-1 | IPA | 58,000 |
| | F-8 | T-1 | Water | 4,000 |
| Comparative Example | H-1 | C-1 | Water | 70,000 |
| | H-2 | C-2 | Water | 62,000 |
| | H-3 | T-1 | No solvent | 22,000 |
| | H-4 | blank | ----- | 200,000 |

* Polyether polyol/ $CaCO_3$

As shown in Table 1, the system of which a surface treating agent of this invention was directly added to the composite system of polymer matrix and filler (see Comparative Example No. H-3) has a viscosity reducing effect much greater than the blank (see Comparative Example No. H-4). The systems of which the filler of this invention whose surface is treated beforehand using an aqueous solution or alcohol solvent solution of surface treating agent is added to polymer matrix (see Examples) have a further great viscosity reducing effect equivalent to or more than that of the system using an alkoxy titanium compound modified with a known animo compound (see Comparative Examples H-1 and H-2).

I-(4) Composite system of acrylic emulsion and filler

One gram of each of surface-treating agents prepared in the previous subsection (1), Samples T-1, T-2 and T-6 and Comparative Samples C-1 and C-2, was added to a mixture system of 200g of the said heavy calcium carbonate and 250g of acrylic emulsion (trade name: alumatex E 175, Mitsui Toatsu Chemicals Co.

), and kneaded for 30 minutes using an Ishikawa-type crusher to give a kneaded product, respectively.

For comparison's sake, a kneaded product with no addition of surface treating agent was prepared.

The prepared kneaded products were measured for the viscosity under the same conditions as those used in the previous subsection (2).

The results of measured viscosity are shown in Table 2.

Table 2

| Sample No. | | Surface treating agent Sample No. | Viscosity of kneaded cp.25℃ |
|---|---|---|---|
| Example | F-9 | T-1 | 8,600 |
| | F-10 | T-2 | 8,200 |
| | F-11 | T-6 | 8,800 |
| Comparative Example | H-5 | C-1 | 18,600 |
| | H-6 | C-2 | 19,200 |
| | H-7 | Blank | 22,400 |

As shown in Table 2, the systems with surface treating agent added have an extremely great viscosity reducing effect.

I-(5) Preparation of surface-treated inorganic filler (II)

A part of each of Samples T-1 to T-4 and Comparative Samples C-1 and C-2, which were prepared in the previous subsection (1), was dissolved in 120 parts of water to give an aqueouss solution of each sample.

To each of the prepared aqueous solutions was added 100 parts of magnesium hydroxide (trade name: Kyowa Suimag F, Kyowa Kagaku Co.) to stir to mix. Then the resulting mixture was spread in a tray and dried under the atmosphere by keeping at 110℃ for 2 hours. Surface treated fillers with coating of alkoxy titanium derivative, Samples F-12 to F-15 and Comparative Samples H-8 and H-9,

were thus prepared.

Magnesium hydroxide (previously mentioned) was surface treated under the same conditions as those used in the above, using an isopropanol solution of Sample T-1 at the same concentration as the above. A surface treated filler with coating of alkoxy titanium derivative, Sample F-16 was thus obtained. Using an aqueous solution of Sample T-1 stored at room temperature for 30 days, magnesium hydroxide (previously mentioned) was surface treated under the same conditions as those used in the above, to give a surface treated filler with coating of alkoxy titanium derivative, Sample F-17.

I-(6) Viscosity reducing effect of composite system of dioctyl phthalate (DOP) and surface-treated magnesium hydroxide

100 parts of each of surface-treated fillers prepared in the above subsection (5), F-12 to F-17 and H-8 and H-9, was added to 240 parts of DOP to knead for 30 minutes using an Ishikawa-type crusher to give a kneaded product, respectively.

For comparison's sake, to 240 parts of DOP were added a part of Sample T-1 and 100 parts of non-treated magnesium hydroxide (previously mentioned), and kneaded under the same conditions as those used in the above, to give a kneaded product. In addition, as a blank, 100 parts of non-treated magnesium hydroxide (previously mentioned) was added to 240 parts of DOP to give a kneaded product similarly to the above.

The prepared kneaded products were measured for the viscosity at 25℃ by the same method as that used in the previous subsection (3).

The results of measured viscosity are shown in Table 3.

Table 3

| Sample No. | | Surface treating agent | | System* viscosity cp.25℃ |
|---|---|---|---|---|
| | | Sample No. | Solvent | |
| Example | F-12 | T-1 | Water | 14,000 |
| | F-13 | T-2 | Water | 38,000 |
| | F-14 | T-3 | Water | 36,000 |
| | F-15 | T-4 | Water | 34,000 |
| | F-16 | T-1 | IPA | 15,000 |
| | F-17 | T-1 | Water | 14,600 |
| Comparative Example | H-8 | C-1 | Water | 96,000 |
| | H-9 | C-2 | Water | 108,000 |
| | H-10 | T-1 | No solvent | 88,000 |
| | H-11 | blank | ----- | 313,600 |

* DOP/ $Mg(OH)_2$

As shown in Table 3, the filler (magnesium hydroxide) whose surface is treated according to this invention has excellent dispersibility into DOP, and the composite system of DOP and magnesium hydroxide has a large viscosity reducing effect.

I-(7) Preparation of surface-treated ferrite

A part of each of Samples T-1 to T-4 and C-1 and C-2, which were prepared in the previous subsection (1), was dissolved in 100 parts of water to give an aqueous solution, respectively.

To each of the prepared aqueous solutions was added 25 parts of ferrite with average grain size of 1.12 $\mu$m, compressive density of 3.20g/$cm^3$, specific surface of 2.15$m^2$/g and oil absorption amount of 12.0ml/100g. The mixture was stirred to mix, spread in a tray and dried under the atmosphere by keeping at 110℃ for 2 hours. Surface treated ferrites with coating of alkoxy titanium derivative, F-18 to F-21 and H-12 and H-13, were thus prepared.

Using an isopropanol solution of Sample T-1 at the same concentration as that of the said aqueous solution, ferrite was treated similarly to the above,

to give surface-treated ferrite, F-22.

I-(8) Viscosity reducing effect of composite system of DOP and surface-treated ferrite

25 parts of each of surface-treated ferrites, F-18 to F-22 and H-12 and H-13, which were prepared in the previous subsection (7), was added to 100 parts of DOP to knead for 30 minutes using an Ishikawa-type crusher to give a kneaded product, respectively.

For comparison's sake, to 100 parts of DOP were added a part of Sample T-1 and 25 parts of non-treated ferrite, and kneaded under the same conditions as those used in the above, to give a kneaded product.

The prepared kneaded products were measured for the viscosity at 25℃ by the same method as that used in the previous subsection (3).

The results of measured viscosity are shown in Table 4.

Table 4

| Sample No. | | Surface treating agent | | System* viscosity cp.25℃ |
|---|---|---|---|---|
| | | Sample No. | Solvent | |
| Example | F-18 | T-1 | Water | 560 |
| | F-19 | T-2 | Water | 460 |
| | F-20 | T-3 | Water | 480 |
| | F-21 | T-4 | Water | 500 |
| | F-22 | T-1 | IPA | 600 |
| Comparative Example | H-12 | C-1 | Water | 2,100 |
| | H-13 | C-2 | Water | 1,980 |
| | H-14 | T-1 | No solvent | 1,200 |
| | H-15 | blank | ----- | 2,300 |

* DOP/ferrite

As shown in Table 4, the ferrite whose surface is treated according to this invention has excellent dispersibility into DOP, and the composite system of DOP and ferrite has a large viscosity reducing effect.

II-(1) Preparation of surface treating agent

(a) Sample T-7

In a reaction flask equipped with a stirrer, a thermometer, a water-cooled condenser and a heater was placed a mole (284 parts) of tetra-isopropoxy titanium as an alkoxy titanium compound, to which a mole (132 parts) of monomethyl succinate was gradually added with stirring. Then 2 moles (200 parts) of acetylacetone was gradually added as a chelating agent. The reaction gradually proceeded to generate heat. The mixture was kept stirred at 60℃ for an hour to mature the reaction, then byproduced isopropanol was distilled under reduced pressure to give 436 parts of light yellow solid Sample (T-7).

The obtained T-7 had $TiO_2$ analytical value of 10.9% (theoretical value: 11.0%).

The results of analysis of T-7 by infrared absorption spectrum (IR analysis) showed that the absorption based on the -COOH group of material monomethyl succinate disappeared and the absorption based on the >C=0 group of coordinated acetylacetone was recognized.

From the above results, it is inferred that T-7 is a crude product of alkoxy titanium derivative of which one isopropoxy group of tetra-isopropoxy titanium is transesterified with methoxy succinyl group and furthermore a mole of acetylacetone is coordinated.

(b) Samples T-8 to T-16

Alkoxy titanium derivatives of T-8 to T-16 were synthesized using a dicarboxylic acid monoalkyl ester, an alkoxy titanium compound and a chelating agent shown in Table 5 by the same method as that used for the synthesis of Sample T-7.

(c) Comparative Sample C-3

In the same reaction flask used for the synthesis of Sample T-7 was placed a mole (340 parts) of tetra-butoxy titanium, to which 2 moles (298 parts) of

triethanolamine was gradually added with stirring. The reaction gradually proceeded to generate heat. After the addition of triethanolamine was completed, the mixture was kept stirred at 60℃ for another an hour to mature the reaction.

Then byproduced n-butanol was distilled under reduced pressure to give light yellow liquid (C-3).

The obtained C-3 had molecular weight of 490 and specific gravity of 1.051, and gradually changed to yellow while in storage.

(d) Comparative Sample C-4

In the same reaction flask used for the synthesis of Sample (T-7) was placed a mole (284 parts) of tetra-isopropoxy titanium, to which 3 moles (312 parts) of N-aminoethyl aminoethanol was gradually added with stirring. The reaction gradually proceeded to generate heat. After the addition of N-aminoethyl aminoethanol was completed, the mixture was kept stirred at 60℃ for another hour to mature the reaction. Then byproduced isopropanol was distilled under reduced pressure to give light yellow liquid C-4.

The obtained C-4 had molecular weight of 416 and specific gravity of 1.142, and gradually changed to yellow while in storage.

Table 5

| Sample No. | | Material compound | | | | | | | | Physical property of reaction product | |
|---|---|---|---|---|---|---|---|---|---|---|---|
| | | Dicarboxylic acid mono ester | mole | Ti (OR) $_4$ | mole | Chelating agent | mole | Others | mole | Molecular weight | Ti content (as $TiO_2$) |
| Ex-am-ple | T−7 | $CH_3OCOCH_2CH_2COOH$ | 1 | $Ti(OC_3H_7)_4$ | 1 | Acetylacetone | 2 | —— | | 436 | 10.9 |
| | T−8 | $C_2H_5OCOCH_2CH_2COOH$ | 1 | $Ti(OC_3H_7)_4$ | 1 | Acetylacetone | 0.5 | —— | | 390 | 12.2 |
| | T−9 | $i\text{-}C_3H_7OCOCH_2CH_2COOH$ | 1 | $Ti(OC_4H_9)_4$ | 1 | Acetylacetone | 2 | —— | | 480 | 10.1 |
| | T−10 | $CH_3OCO(CH_2)_3COOH$ | 1 | $Ti(OC_3H_7)_4$ | 1 | Lactic acid | 2 | —— | | 430 | 11.2 |
| | T−11 | 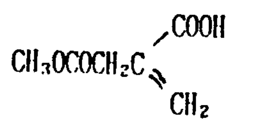 | 1 | $Ti(OC_3H_7)_4$ | 1 | Diethylene glycol | 2 | —— | | 414 | 11.5 |
| | T−12 | 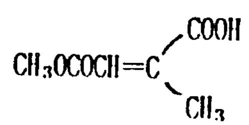 | 4 | Tetramer of $Ti(OC_4H_9)_4$ | 1 | Ethyl acetoacetate | 2 | —— | | 1,462 | 13.0 |
| | T−13 | $CH_3OCOCH{=}CHCH_2COOH$ | 6 | hexamer of $Ti(OC_3H_9)_4$ | 1 | Acetylacetone | 9 | —— | | 2,044 | 14.0 |
| | T−14 | $CH_3OCOCH_2OCH_2COOH$ | 1.5 | $Ti(OC_3H_7)_4$ | 1 | Acetylacetone | 2 | —— | | 496 | 9.9 |

Table 5 (cont'd)

| Sample No. | | Material compound | | | | | | | | Physical property of reaction product | |
|---|---|---|---|---|---|---|---|---|---|---|---|
| | | Dicarboxylic acid mono ester | mole | Ti (OR)$_4$ | mole | Chelating agent | mole | Others | mole | Molecular weight | Ti content (as $TiO_2$) |
| Example | T−15 | $C_2H_5OCOCH_2OCH_2COOH$ | 2 | Ti $(OC_3H_7)_4$ | 1 | Phenyl acetylacetone | 1 | ——— | | 604 | 7.8 |
| | T−16 | i-$C_3H_7OCOCH_2OCH_2COOH$ | 1 | Ti $(OC_3H_7)_4$ | 1 | Ethyl acetoacetate | 1 | ——— | | 456 | 10.4 |
| Comparative example | C−3 | ——— | | Ti $(OC_4H_9)_4$ | 1 | ——— | | Triethanol-amine | 2 | 490 | ——— |
| | C−4 | ——— | | Ti $(OC_3H_7)_4$ | 1 | ——— | | N-aminoethyl aminoethanol | 3 | 416 | ——— |

II-(2) Preparation of surface-treated inorganic filler [I]

Two parts of each of Samples T-7 to T-16 and Comparative Samples C-3 and C-4, which were synthesized in the previous subsection (1), was dissolved in 98 parts of water to give an aqueous solution, respectively.

To 50 parts of each of the prepared aqueous solutions was added 100 parts of heavy calcium carbonate (trade name: Whiton SSB, Shiraishi Kogyo Co.) to well mix in a mortar. Then the mixture was spread in a stainless-steel tray and dried in a hot-air dryer of 110℃ for 2 hours. Surface treated fillers with coating of alkoxy titanium derivative, Samples F-23 to F-32 and Comparative Samples H-16 and H-17 were thus obtained.

Heavy calcium carbonate was surface treated using a 2% isopropanol solution of Sample T-7 under the same conditions as those used in the above, to give a surface treated filler with coating of alkoxy titanium derivative, Sample F-33. Using a 2% aqueous solution of Sample T-7 stored at room temperature for 30 days, heavy calcium carbonate was surface treated under the same conditions as those used in the above, to give a surface treated filler with coating of alkoxy titanium derivative, Sample F-34.

II-(3) Viscosity reducing effect of composite system of polyether polyol and inorganic filler

100 parts of each of surface-treated inorganic fillers prepared in the previous subsection (2), Samples F-23 to F-34 and Comparative Samples H-16 and H-17, was added to 75 parts of polyether polyol (trade name: Diol 3000, Mitsui Nisso Urethane Co.) and kneaded for 30 minutes using an Ishikawa-type crusher to give a kneaded product, respectively.

For comparison's sake, to 75 parts of the said polyether polyol were added a part of Sample T-7 prepared in the previous subsection (1) and 100 parts of non-treated heavy calcium carbonate, and kneaded under the same conditions as those used in the above, to give a kneaded product. As a blank, to 75 parts of the said polyether polyol was added 100 parts of the said heavy calcium

carbonate with no surface treated, and kneaded under the same conditions as those used in the above, to give a kneaded product.

The obtained kneaded products were measured for the viscosity at 25℃ using a rotary viscometer (B8R type, Tokyo Keiki Co.) under the conditions of rotor No. 7 and 20 rpm.

The results of measured viscosity are shown in Table 6.

Comparative Examples H-18 and H-19 shown in Table 6 have a non-treated filler.

Table 6

| Sample No. | | Surface treating agent | | System* viscosity cp. 25℃ |
|---|---|---|---|---|
| | | Sample No. | Solvent | |
| Example | F-23 | T-7 | Water | 3,400 |
| | F-24 | T-8 | Water | 4,600 |
| | F-25 | T-9 | Water | 4,200 |
| | F-26 | T-10 | Water | 5,600 |
| | F-27 | T-11 | Water | 4,800 |
| | F-28 | T-12 | Water | 4,500 |
| | F-29 | T-13 | IPA | 4,800 |
| | F-30 | T-14 | Water | 3,600 |
| | F-31 | T-15 | Water | 4,600 |
| | F-32 | T-16 | Water | 4,800 |
| | F-33 | T-7 | IPA | 18,000 |
| | F-34 | T-7 | Water | 4,000 |
| Comparative Example | H-16 | C-3 | Water | 70,000 |
| | H-17 | C-4 | Water | 62,000 |
| | H-18 | T-7 | No solvent | 22,000 |
| | H-19 | blank | ----- | 200,000 |

* Polyether polyol/ $CaCO_3$

As shown in Table 6, the system of which a surface treating agent of this invention was directly added to the composite system of polymer matrix and filler (see Comparative Example No. H-18) has a viscosity reducing effect much

greater than that of the blank (see Comparative Example No. H-19). The systems of which the filler of this invention whose surface is treated beforehand using an aqueous solution or alcohol solvent solution of surface treating agent is added to polymer matrix (see Examples) have a further great viscosity reducing effect equivalent to or more than that of the system using an alkoxy titanium compound modified with a known animo compound (see Comparative Examples H-16 and H-17).

II-(4) Viscosity-reducing effect of composite system of acrylic emulsion and filler

One gram of each of surface-treating agents prepared in the previous subsection (1), Samples T-7, T-8 and T-12, and Comparative Samples C-3 and C-4, was added to a mixture system of 200g of the said heavy calcium carbonate and 250g of acrylic emulsion (trade name: alumatex E-175, Mitsui Toatsu Chemicals Co. ), and kneaded for 30 minutes using an Ishikawa-type crusher to give a kneaded product, respectively.

For comparison's sake, a kneaded product with no addition of surface treating agent was prepared.

The prepared kneaded products were measured for the viscosity under the same conditions as those used in the previous subsection (2).

The results of measured viscosity are shown in Table 7.

Table 7

| Sample No. | | Surface treating agent Sample No. | Viscosity of kneaded cp.25℃ |
|---|---|---|---|
| Example | F-35 | T-7 | 8,800 |
| | F-36 | T-8 | 8,400 |
| | F-37 | T-12 | 8,600 |
| Comparative Example | H-20 | C-3 | 18,600 |
| | H-21 | C-4 | 19,200 |
| | H-22 | Blank | 22,400 |

As shown in Table 7, the systems with surface treating agent added are recognized to have an extremely great viscosity reducing effect.

II-(5) Preparation of surface-treated inorganic filler (II)

A part of each of Samples T-9 to T-12 and Comparative Samples C-3 and C-4, which were prepared in the previous subsection (1), was dissolved in 120 parts of water to give an aqueous solution of each sample. To each of the prepared aqueous solutions was added 100 parts of magnesium hydroxide (trade name: Kyowa Suimag F, Kyowa Kagaku Co.) to stir to mix. Then the resulting mixture was spread in a tray and dried under the atmosphere by keeping at 110℃ for 2 hours. Surface treated fillers with coating of alkoxy titanium derivative, Samples F-38 to F-41 and Comparative Samples H-23 and H-24, were thus prepared.

Magnesium hydroxide (previously mentioned) was surface treated under the same conditions as those used in the above, using an isopropanol solution of Sample T-9 at the same concentration as the above. A surface treated filler with coating of alkoxy titanium derivative, Sample F-42, was thus obtained. Using an aqueous solution of Sample T-9 stored at room temperature for 30 days, magnesium hydroxide (previously mentioned) was surface treated under the same conditions as those used in the above, to give a surface treated filler with coating of alkoxy titanium derivative, Sample F-43.

II-(6) Viscosity reducing effect of composite system of dioctyl phthalate (DOP) and magnesium hydroxide

100 parts of each of surface-treated fillers prepared in the above subsection (5), F-38 to F-43 and H-23 and H-24, was added to 240 parts of DOP to knead for 30 minutes using an Ishikawa-type crusher to give a kneaded product, respectively.

For comparison's sake, to 240 parts of DOP were added a part of Sample T-9 and 100 parts of non-treated magnesium hydroxide (previously mentioned), and kneaded under the same conditions as those used in the above, to give a kneaded

product. In addition, as a blank, 100 parts of non-treated magnesium hydroxide (previously mentioned) was added to 240 parts of DOP to give a kneaded product similarly to the above.

Each of the prepared kneaded products were measured for the viscosity at 25℃ by the same method as that used in the previous subsection (3).

The results of measured viscosity are shown in Table 8.

Table 8

| Sample No. | | Surface treating agent | | System* viscosity cp.25℃ |
|---|---|---|---|---|
| | | Sample No. | Solvent | |
| Example | F-38 | T-9 | Water | 13,000 |
| | F-39 | T-10 | Water | 29,000 |
| | F-40 | T-11 | Water | 28,000 |
| | F-41 | T-12 | Water | 32,000 |
| | F-42 | T-9 | IPA | 33,000 |
| | F-43 | T-9 | Water | 34,000 |
| Comparative Example | H-23 | C-3 | Water | 96,000 |
| | H-24 | C-4 | Water | 108,000 |
| | H-25 | T-9 | No solvent | 88,000 |
| | H-26 | blank | ----- | 313,600 |

* DOP/$Mg(OH)_2$

As shown in Table 8, the surface-treated fillers (magnesium hydroxide) of this invention have excellent dispersibility into DOP, and the composite system of DOP and magnesium hydroxide has a large viscosity reducing effect.

II-(7) Preparation of surface-treated ferrite

A part of each of Samples T-13 to T-16 and C-5 and C-6, which were prepared in the previous subsection (1), was dissolved in 100 parts of water to give an aqueous solution, respectively.

To each of the prepared aqueous solutions was added 25 parts of ferrite with average grain size of 1.12$\mu$m, compressive density of 3.20g/$cm^3$, specific

surface of $2.15m^2/g$ and oil absorption amount of 12.0ml/100g. The mixture was stirred to mix, spread in a tray and dried under the atmosphere by keeping at 110℃ for 2 hours. Surface treated ferrites with coating of alkoxy titanium derivative, F-44 to F-47 and H-27 and H-28, were thus prepared.

Using an isopropanol solution of Sample T-13 at the same concentration as that of the said aqueous solution, ferrite was treated similarly to the above, to give surface-treated ferrite, F-48.

II-(8) Viscosity reducing effect of composite system of DOP and ferrite

25 parts of each of surface-treated ferrites, F-44 to F-48 and H-27 and H-28, which were prepared in the previous subsection (7), was added to 100 parts of DOP to knead for 30 minutes using an Ishikawa-type crusher to give a kneaded product, respectively.

For comparison's sake, to 100 parts of DOP were added a part of Sample T-13 and 25 parts of non-treated ferrite, and kneaded under the same conditions as those used in the above, to give a kneaded product.

Each of the prepared kneaded products was measured for the viscosity at 25 ℃ by the same method as that used in the previous subsection (3).

The results of measured viscosity are shown in Table 9.

Table 9

| Sample No. | | Surface treating agent | | System* viscosity cp.25℃ |
|---|---|---|---|---|
| | | Sample No. | Solvent | |
| Example | F-44 | T-13 | Water | 660 |
| | F-45 | T-14 | Water | 560 |
| | F-46 | T-15 | Water | 570 |
| | F-47 | T-16 | Water | 600 |
| | F-48 | T-13 | IPA | 700 |
| Comparative Example | H-27 | C-5 | Water | 2,100 |
| | H-28 | C-6 | Water | 1,980 |
| | H-29 | C-13 | No solvent | 1,200 |
| | H-30 | blank | ----- | 2,300 |

* DOP/ferrite

As shown in Table 9, the surface-treated ferrite (filler) of this invention has excellent dispersibility into DOP, and the composite system of DOP and ferrite has a large viscosity reducing effect.

〔Possibility of Industrial Applications〕

As shown in the above examples, the surface treating agent of this invention has a large effect on surface treatment of filler. The composite systems of polymer matrix and filler, which use a filler whose surface is treated beforehand using the said surface treating agent, have an extremely excellent viscosity reducing effect.

Particularly the composite systems of which a filler of this invention whose surface is treated with an aqueous system is kneaded in a polymer matrix have an extremely large viscosity reducing effect, and the dispersibility into a polymer matrix is extremely good.

Use of a filler whose surface is treated using a surface treating agent of this invention makes it possible to densely fill the filler into a polymer matrix and to improve the workability associated with a reduction in the viscosity of composite system.

The surface treating agents of this invention for fillers are extremely stable in aqueous systems and thus need no use of organic solvents as conventional titanium coupling agents do, thereby being very safe.

This invention is to provide surface treating agents with excellent stability in aqueous systems and fillers whose surface is treated with the said agent with excellent dispersibility into a polymer matrix, therefore having extremely great industrial significance.

(1) A surface treating agent which comprises containing a reaction product of
(A) a tetra-alkoxy titanium and/or a hydrolyte condensation polymer of tetra-alkoxy titanium with condensation degree of 6 or below,
(B) at least one compound selected from the group consisting of maleic acid monoesters, succinic acid monoesters, glutaric acid monoesters, itaconic acid monoesters, citraconic acid monoesters, glutaconic acid monoesters, diglycolic acid monoesters, polyalkylene glycol monoalkyl ethers and N-alkylamino alcohols, and
(C) a chelating agent able to form a chelate ring with Ti atom, and (B) is 0.1 to 2.0 moles per mole of Ti atom and the chelating agent of (C) is 0.5 moles or more per mole of Ti atom.

(2) A surface treating agent according to Claim (1) in which the chelating agent able to form a chelate ring with Ti atom is at least one compound selected from the group consisting of hydroxy carbonic acids, β-diketones, α- or β-keto acids and their lower alkyl esters, and (poly) alkylene glycols.

(3) Filler powder whose surface is treated with the surface treating agent according to Claim (1).

# INTERNATIONAL SEARCH REPORT

International Application No PCT/JP89/00346

**I. CLASSIFICATION OF SUBJECT MATTER** (if several classification symbols apply, indicate all) [8]

According to International Patent Classification (IPC) or to both National Classification and IPC

Int. $Cl^4$ C09C3/08

**II. FIELDS SEARCHED**

Minimum Documentation Searched [7]

| Classification System | Classification Symbols |
|---|---|
| IPC | C09C3/08, C08K9/04 |

Documentation Searched other than Minimum Documentation to the Extent that such Documents are Included in the Fields Searched [8]

| | |
|---|---|
| Jitsuyo Shinan Koho | 1926 - 1989 |
| Kokai Jitsuyo Shinan Koho | 1971 - 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 50-145448 (Kenrich Petrochemicals, Inc.)<br>21 November 1975 (21. 11. 75)<br>& DE, A, 2515863 & BE, A, 827815<br>& NL, A, 7504386 & SE, A, 7504135<br>& NO, A, 7501287 & FR, A, 2274643<br>& ZA, A, 7501728 & GB, A, 1509283<br>& SE, A, 7806397 & CH, A, 606054<br>& CH, A, 611925 & CA, A, 1062272<br>& IT, B, 1032652 & JP, A, 56084723<br>& JP, B, 84015337 & DE, C, 2515863 | 1-3 |
| A | JP, A, 52-104541 (Kenrich Petrochemicals, Inc.)<br>2 September 1977 (02. 09. 77)<br>& DE, A, 2703829 & FR, A, 2339658<br>& US, A, 4069192 & DE, B, 2703829<br>& GB, A, 1576271 & GB, A, 1576272<br>& JP, B, 80046660 & CA, A, 1093237<br>& ES, A, 8307862 | 1-3 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| May 29, 1989 (29. 05. 89) | June 12, 1989 (12. 06. 89) |
| **International Searching Authority** | **Signature of Authorized Officer** |
| Japanese Patent Office | |

FURTHER INFORMATION CONTINUED FROM THE SECOND SHEET

| | | |
|---|---|---|
| P | JP, A, 63-260940 (Nippon Soda Co., Ltd.) 27 October 1988 (27. 10. 88) (Family: none) | 1-3 |
| P | JP, A, 63-270750 (Nippon Soda Co., Ltd.) 8 November 1988 (08. 11. 88) (Family: none) | 1-3 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers ........, because they relate to subject matter not required to be searched by this Authority, namely:

2.☐ Claim numbers .........., because they relate to parts of the international application that do not comply with the prescribed requirements to such an extent that no meaningful international search can be carried out, specifically:

3.☐ Claim numbers ..........., because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.